(19)

**Europäisches Patentamt**
**European Patent Office**
**Office européen des brevets**

(11) **EP 4 546 703 B1**

(12) **EUROPEAN PATENT SPECIFICATION**

(45) Date of publication and mention
of the grant of the patent:
**22.04.2026 Bulletin 2026/17**

(21) Application number: **23205380.1**

(22) Date of filing: **24.10.2023**

(51) International Patent Classification (IPC):
$H04L\ 9/08^{(2006.01)}$      $H04L\ 9/16^{(2006.01)}$
$H04L\ 9/30^{(2006.01)}$      $H04L\ 9/32^{(2006.01)}$

(52) Cooperative Patent Classification (CPC):
**H04L 9/088; H04L 9/0822; H04L 9/16;**
**H04L 9/3073; H04L 9/3242; H04L 9/3247;**
H04L 2209/601

(54) **METHOD FOR AUTHENTICATABLE DATA TRANSMISSION**

VERFAHREN ZUR AUTHENTIFIZIERBAREN DATENÜBERTRAGUNG

PROCÉDÉ DE TRANSMISSION DE DONNÉES AUTHENTIFIABLE

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(43) Date of publication of application:
**30.04.2025 Bulletin 2025/18**

(73) Proprietor: **u-blox AG**
**8800 Thalwil (CH)**

(72) Inventors:
• **Lenzarini, Davide**
**8800 Thalwil (CH)**
• **Perazzo, Pericle**
**56126 Pisa (IT)**
• **Vallati, Carlo**
**56126 Pisa (IT)**

(74) Representative: **Epping - Hermann - Fischer**
**Patentanwaltsgesellschaft mbH**
**Schloßschmidstraße 5**
**80639 München (DE)**

(56) References cited:
**EP-A1- 4 262 137     US-A1- 2021 336 797**

• **POZZOBON OSCAR ET AL: "GIANLUCA
CAPARRA UNIVERSITY OF PADOVA CHRISTIAN
WULLEMS EUROPEAN SPACE AGENCY, ESTEC
SILVIA CECCATO, SILVIA STURARO, NICOLA
LAURENTI UNIVERSITY OF PADOVA", 1 October
2016 (2016-10-01), pages 1 - 10, XP093147337,
Retrieved from the Internet <URL:https://www.
insidegnss.com/auto/sepoct16-WP.pdf>
[retrieved on 20240403]**
• **BAEE MIR ALI REZAZADEH ET AL: "On the
Efficiency of Pairing-Based Authentication for
Connected Vehicles: Time is Not on Our Side!",
IEEE TRANSACTIONS ON INFORMATION
FORENSICS AND SECURITY, IEEE, USA, vol. 16,
7 June 2021 (2021-06-07), pages 3678 - 3693,
XP011869387, ISSN: 1556-6013, [retrieved on
20210727], DOI: 10.1109/TIFS.2021.3087359**

EP 4 546 703 B1

**Description**

TECHNICAL FIELD

This disclosure relates to a method for authenticatable data transmission. The disclosure further relates to a provider device, a receiver device and a system thereof that enable data transmission that is authenticatable.

BACKGROUND ART

In many applications where data are transmitted from a provider or transmitter to one or more receivers there is a need for authentication of the transmitted data. Various cryptographic schemes are generally known for such authentication. For example, the provider or transmitter generates a cryptographic signature of the transmitted data employing a private key, and the signature is verified by the receiver with the corresponding public key, which has to be known by the receiver. In addition or as an alternative, cryptographic hash functions or keyed hashed message authentication codes, MACs, which also require some key information being present at the receiver, can be used.

In applications with limited transmission bandwidth it is a challenge to bring the information required for authentication to the receiver. Furthermore, if payload data to be transmitted is known in advance, the respective data for authentication, e.g. signature or MAC, can be generated and sent in advance, i.e. before actually transmitting the payload data to be authenticated. This allows immediate authentication by the receiver once the payload data to be authenticated is received.

However, if the payload data to be transmitted is not known in advance, conventional solutions generate and transmit the respective data for authentication after transmitting the payload data. However, this may not be always possible if the transmission bandwidth is limited. Hence, the immediate authentication upon receiving the payload data is not always possible with the conventional solutions.

Document XP093147337 is directed to the fundamentals and various objectives of global navigation satellite systems (GNSS) authentication.

SUMMARY OF INVENTION

An object to be achieved is to provide an improved cryptographic concept for authenticatable data transmission with reduced effort, e.g. in a positioning system or in general in a system distributing content with short time validity to a large number of consumers.

This object is achieved with the subject-matter of the independent claims. Embodiments and developments derive from the dependent claims.

In an application, where authenticatable data transmission is performed via a one-to-many communication channel from a provider device to a receiver device, at least two types of messages are to be transmitted from the provider device to the receiver device. For example, during a time period called an epoch a defined set of the at least two types of messages, with, e.g., in general different short time validities may be transmitted. For the messages of a first type a respective hash, e.g. a keyed hashed MAC, can be generated in advance, e.g. at the beginning of the epochs when they are generated, i.e. before transmitting them. Messages of a second type are not fixed or defined in advance, e.g. at the beginning of the epoch, for example because they are dependent on the time instant when they are transmitted, e.g. on data only available close to the time instant.

In the provider device a first key pair is stored comprising a first private key and a first public key and supporting bilinear pairings, for example asymmetric bilinear pairings, based on a first generator P selected from a first cyclic group $G_1$ of a first order q and on a second generator Q selected from a second cyclic group $G_2$ of the first order q, wherein the first private key is based on a random number in an interval ]0;q-1] and the first public key is computed using the second generator Q and the first private key. For example, the first order q is a first prime order q. Furthermore one or more second key pairs are obtained by the provider device, each comprising a respective second private key and a respective second public key and supporting bilinear pairings, e.g. asymmetric bilinear pairings, based on a second order q' smaller than the first order q. For example, the second order q' is a second prime order q'. For example, the plurality of second key pairs are generated employing the same cryptographic scheme as the first key pair but using other parameters like different cyclic groups and random numbers. It is also possible to use key pairs supporting symmetric bilinear pairings, but it is not advisable as in this case the size of the signature is bigger.

The improved cryptographic concept is, for example, based on asymmetric bilinear pairings, e.g. of Type III or higher. This, for example, allows a predefined security level to be defined by choosing specific elliptic curves such as one of several Barreto-Naehrig, BN, curves or Barreto-Lynn-Scott, BLS, curves, e.g. parameterized to provide at least a predefined number of bits of security strength, like 64 bits, 72 bits, 80 bits, 100 bits or even higher, adjustable to e.g. available computing resources and/or bandwidth resources.

The improved cryptographic concept is based on the idea that the hashes of the messages of the first type and either the second public key of a selected second key pair or data adapted for deriving the second public key of the selected second key pair are transmitted before transmitting the actual messages of the first type, together with a signature generated employing the first private key. Hence the messages of the first type can be immediately authenticated using the hashes, once received by the receiver device. Furthermore, the messages of the second type can be signed employing the second private key of the selected second key pair for creating an associated signature. As the corresponding second public key has been transmitted before transmitting the messages of the second type, authentication of the associated signature is possible, particularly immediately possible. This particularly applies to applications with limited transmission bandwidth.

The smaller second order q' used by the second key pairs results in a reduced level of security compared to the first order q used by the first key pairs. However, the signatures and the public keys are also smaller, which is e.g. beneficial in terms of limited bandwidth. Furthermore, due to the availability of one or more second key pairs, another second key pair can be obtained and/or selected in case of performing the concept repeatedly, such that each selected second key pair has an estimated maximum life time until an attacker is supposed to have broken the selected second key pair.

In an example implementation according to the improved cryptographic concept for a method for authenticatable data transmission via a one-to-many communication channel from a provider device to a receiver device, the method comprises: obtaining, by the provider device, a first key pair comprising a first private key and a first public key and supporting bilinear pairings, e.g. asymmetric bilinear pairings based on a first generator P selected from a first cyclic group $G_1$ of a first order q and on a second generator Q selected from a second cyclic group $G_2$ of the first order q different to the first cyclic group $G_1$, wherein the first private key is based on a random number in an interval $]0;q-1]$ and the first public key is computed using the second generator Q and the first private key. One or more second key pairs, each comprising a respective second private key and a respective second public key and supporting bilinear pairings, e.g. asymmetric bilinear pairings, based on a second order q' smaller than the first order q are obtained by the provider device. The first public key is provided to the receiver device. The above steps can be seen as some kind of preparation, for example. The first order q may be a first prime order q, and the second order q' may be a second prime order q'.

One or more messages of a first type are obtained or generated by the provider device. One of the one or more second key pairs is selected by the provider device. A respective hash is generated by the provider device for each of the one or more messages of the first type. Following that an authentication message including the generated hashes and either the second public key of the selected second key pair or data adapted for deriving the second public key of the selected second key pair is composed by the provider device. The composed authentication message is signed by the provider device employing the first private key for producing a signed aggregated authentication message. The provider device distributes via the one-to-many communication channel the signed aggregated authentication message to the receiver device.

After distributing the signed aggregated authentication message, the provider device distributes via the one-to-many communication channel the one or more messages of the first type to the receiver device. Furthermore, after distributing the signed aggregated authentication message the provider device obtains or generates one or more messages of a second type and signs the one or more messages of the second type employing the second private key of the selected second key pair for creating an associated signature. The provider device then distributes via the one-to-many communication channel, the one or more messages of the second type together with the respective associated signature, in particular for each message.

After distributing the signed aggregated authentication message there is no defined sequence of transmission of the messages of the first and the second type. For example, the messages of the second type are transmitted in between the messages of the first type.

For example, a time period from the obtaining of the messages of the first type until the end of distribution of all messages via the one-to-many communication channel may be called an epoch. Such epoch may have a predefined length like 10 s or 20 s or 30 s or 40 s or more.

The above described procedure allows a receiver device to authenticate immediately after reception both the messages of the first type and the messages of the second type.

In the description above transmission to a single receiver device is disclosed as a non-limiting example. However, with the one-to-many communication network employed, the same data can be transmitted to a plurality of receiver devices, which each are enabled to authenticate immediately after reception both the messages of the first type and the messages of the second type.

For example, the receiver device authenticates the signed aggregated authentication message employing the first public key, and then authenticates the one or more messages of the first type employing the respective hashes distributed with the signed aggregated authentication message. The receiver device further derives the second public key of the selected second key pair from the signed aggregated authentication message and authenticates the one or more messages of the second type employing the associated signature and the second public key of the selected second key pair.

Authentication of the one or more messages of the first type may include respective hash operations on the messages received and comparing the result of those hash operations with the hashes contained in the signed aggregated authentication message. For example, the receiver device performs the same hash operations, e.g. of a hash function, on the messages of the first type as the provider device did when generating the hashes, such that the same hash as included in the signed aggregated authentication message will result, if the message is the same. Consequently, the comparison of the transmitted hash and the hash generated by the receiver device allows the authentication of the respective message concerned.

In some implementations each second public key of a subset of the one or more second key pairs is encrypted with a dedicated symmetric security key. For example, two or more second key pairs are encrypted. The encrypted second public keys are provided to the receiver device, e.g. via a secure communication channel, for example before generating the messages of the second type. The authentication message is selectively either composed with the second public key of the selected second key pair or the data adapted for deriving the second public key of the selected second key pair, wherein the data comprise a nonce and the dedicated symmetric security key for the decryption of the encrypted second public key. Hence the receiver device can derive the second public key by either simply extracting the second public key from the signed aggregated authentication message, if included as such, or by decrypting one of the previously distributed encrypted second public keys with the dedicated symmetric security key.

In some implementations the second key pairs are generated by the trusted entity but provided to the provider device in plain text via a secure channel. Furthermore, the second public keys are distributed to the receiver devices within the signed aggregated authentication message.

In some implementations the second key pairs are generated by the trusted entity, which also generates the dedicated symmetric security key for each second public key of the subset and uses this symmetric security key for encryption of said second public key. The second public keys are distributed from the trusted entity to the receiver devices in encrypted form. The second key pairs are distributed from the trusted entity, via a secure channel, to the provider device in plain text together with the dedicated symmetric security key.

In some implementations each second public key encrypted with a dedicated symmetric security key is distributed together with a respective Initialization Vector that for example includes information about the type of encryption like AES GCM, CCM, CTR, CBC.

In some alternative implementations the second key pairs are generated by the trusted entity but provided to the provider device in plain text via a secure channel. The provider device generates the dedicated symmetric security key for each second public key of the subset and uses this symmetric security key for encryption of said second public key. The encrypted second public keys are distributed to the receiver devices.

The selection, by the receiver device, of one of the previously distributed encrypted second public keys to be decrypted could be done for instance using some parameters available in the authentication message or via an auto-determination algorithm shared between the provider device and the receiver device. The auto-determination algorithm could for instance select one of the previously distributed encrypted second public keys to be decrypted by using the UTC date time.

For example, the first key pair is generated, by the provider device or a trusted entity, repeatedly with a first repetition rate and subsequently stored in the provider device, each generated first key pair distinguishing from the first key pair of a preceding repetition, and selecting one of the one or more second key pairs is performed with a second repetition rate that is higher than the first repetition rate, e.g. by a factor of at least 100, each selected second key pair distinguishing from any selected second key pair of preceding repetitions.

For example, if the first key pair is generated with a first repetition rate and the second key pair is obtained and/or selected with a second repetition rate that is higher than the first repetition rate, the lifetime, also called crypto period, of each second key pair can be limited with little effort. Consequently, a smaller security level can be tolerated for the second key pair in order to save bandwidth, as a smaller security level may mean a smaller signature and a smaller public key to be distributed.

If obtaining the one or more second key pairs consists of obtaining a single second key pair, obtaining the one or more second key pairs and selecting the one of the one or more second key pairs may be performed with the second repetition rate. This may for example apply, if the selected second public key is directly included in the signed aggregated authentication message, i.e. in un-encrypted form.

If obtaining the one or more second key pairs consists of obtaining more than one second key pair, e.g. a plurality of second key pairs, selecting the one of the one or more second key pairs may be performed with the second repetition rate and obtaining the one or more second key pairs may performed with the first repetition rate or with a third repetition rate that is higher than the first repetition rate and lower than the second repetition rate. This may for example apply, if data adapted for deriving the second public key of the selected second key pair is included in the signed aggregated authentication message, e.g. the dedicated symmetric security key.

In some implementations the provider device generates or obtains more than one first key pair supporting bilinear pairings, for example asymmetric bilinear pairings, which key pairs may have different cryptographic parameters, e.g.

different curves like BN curves on a 256-bit prime field or BLS-12 curves on a 381-bit prime field. In such implementations the respective first public keys need to be distributed to the receiver device(s) before using them for signature/authentication purposes. With every epoch one of the available first key pairs is selected for signing the composed authentication message. For example, the first key pairs have a different security level and result in different signature sizes. Hence the selection can for example be made dependent on the available bandwidth or number of bits.

Only as a non-limiting example, the provider device is provided with a set of first key pairs for instance on BN curves on a 256-bit prime field and a set of first key pairs with higher security level for instance on BLS-12 curves on a 381-bit prime field. On the other side the receiver device is provided with the respective first public keys of the used first key pairs.

For example, the hashes of the one or more messages of the first type are generated based on an intermediate key derived from at least parts of the composed authentication message, e.g. parts of the second public key of the selected second key pair or parts of the nonce and the dedicated symmetric security key, if applicable. The intermediate key is intermediate insofar as it changes with every authentication message or epoch, respectively. A rule for which parts to use for the intermediate key may be pre-agreed between the provider device and the receiver device, or corresponding parameters may be communicated. For example, such parameters may be included in a control section within the composed authentication message. Each hash may be a keyed hashed message authentication code, HMAC or CMAC or KMAC. For example, a hash function employing a key, i.e. the intermediate key, may be used to generate the hash from the respective message.

The generation of the hashes of the one or more messages of the first type may include some kind of truncation in order to reduce the number of bits to be transmitted. Hence the level of truncation can for example be made dependent on the available bandwidth or number of bits.

For example, the composed authentication message further includes a control section including information on at least one of:

- a key to be used for generating the hashes;
- a hash function to be used for generating the hashes;
- a number of rounds to be used for generating the hashes;
- a truncation level to be used for generating the hashes.

In some implementations signing the composed authentication message and/or signing the one or more messages of the second type is based on a short signature scheme, which produces respective signatures corresponding to a respective single elliptic curve point. For example, signing is based on a pairing-friendly Barreto-Naehrig curve or Barreto-Lynn-Scott curve. A short signature scheme is different from traditional signature schemes like ECDSA based on curves not pairing-friendly (like for instance secp256r1) that produce larger signatures.

The improved cryptographic concept further provides a provider device for a one-to-many communication network wherein

- a first key pair comprising a first private key and a first public key and supporting bilinear pairings, e.g. asymmetric bilinear pairings, is generated by the provider device or a trusted entity based on a first generator P selected from a first cyclic group $G_1$ of a first order q and on a second generator Q selected from a second cyclic group $G_2$ of the first order q, wherein the first private key is based on a random number in an interval ]0;q-1] and the first public key is computed using the second generator Q and the first private key;
- the first public key is provided to a receiver device; and
- one or more second key pairs, each comprising a respective second private key and a respective second public key and supporting bilinear pairings, e.g. asymmetric bilinear pairings, based on a second order q' smaller than the first order q are generated by the provider device or the trusted entity.

With these prerequisites, the provider device is configured to obtain the first key pair and the plurality of second key pairs, to obtain one or more messages of a first type, to select one of the one or more second key pairs, to generate a respective hash for each of the one or more messages of the first type, and to compose an authentication message including the generated hashes and either the second public key of the selected second key pair or data adapted for deriving the second public key of the selected second key pair. The provider device is further configured to sign the composed authentication message employing the first private key for producing a signed aggregated authentication message and to distribute, via a one-to-many communication channel, the signed aggregated authentication message to the receiver device. The provider device further distributes, via the one-to-many communication channel after distributing the signed aggregated authentication message, the one or more messages of the first type to the receiver device.

The provider device is further configured to obtain, after distributing the signed aggregated authentication message, one or more messages of a second type, to sign the one or more messages of the second type employing the second private key of the selected second key pair for creating an associated signature, and to distribute, via the one-to-many communication channel, the one or more messages of the second type together with the associated signature to the receiver device.

The improved cryptographic concept further provides a receiver device for a one-to-many communication network wherein

- a first key pair comprising a first private key and a first public key and supporting bilinear pairings, e.g. asymmetric bilinear pairings, is generated by a provider device or a trusted entity based on a first generator P selected from a first cyclic group $G_1$ of a first order q and on a second generator Q selected from a second cyclic group $G_2$ of the first order q, wherein the first private key is based on a random number in an interval ]0;q-1] and the first public key is computed using the second generator Q and the first private key;
- the first public key is provided to the receiver device;
- one or more second key pairs, each comprising a respective second private key and a respective second public key and supporting bilinear pairings, e.g. asymmetric bilinear pairings, based on a second order q' smaller than the first order q are generated by the provider device or the trusted entity;
- one or more messages of a first type are obtained by the provider device;
- one of the one or more second key pairs is selected by the provider device;
- a respective hash is generated by the provider device for each of the one or more messages of the first type;
- an authentication message is composed by the provider device including the generated hashes and either the second public key of the selected second key pair or data adapted for deriving the second public key of the selected second key pair;
- the composed authentication message is signed by the provider device employing the first private key for producing a signed aggregated authentication message;
- one or more messages of a second type are obtained by the provider device; and
- the one or more messages of the second type are signed by the provider device employing the second private key of the selected second key pair for creating an associated signature.

With these prerequisites, the receiver device is configured to store the first public key, to receive, from the provider device via a one-to-many communication channel, the signed aggregated authentication message, and to authenticate the signed aggregated authentication message employing the first public key. The receiver device is further configured to derive the second public key of the selected second key pair from the signed aggregated authentication message, to derive the second public key of the selected second key pair from the signed aggregated authentication message, to receive, from the provider device via the one-to-many communication channel, the one or more messages of the first type, and to authenticate the one or more messages of the first type employing the respective hashes distributed with the signed aggregated authentication message. The receiver device is further configured to receive, from the provider device via the one-to-many communication channel, the one or more messages of the second type together with the associated signature, and to authenticate the one or more messages of the second type employing the associated signature and the second public key of the selected second key pair.

According to the improved cryptographic concept, a communication system for a one-to-many communication network may comprise a provider device as described above and a receiver device as described above.

Further implementations and developments of the provider device, the receiver device and the communication system become readily apparent for the skilled reader from the various implementations described above or in the following in conjunction with the method for authenticatable data transmission via a one-to-many communication channel from a provider device to a receiver device. For example, the improved cryptographic concept may be applied in a positioning system like a GNSS positioning system, where the payload data e.g. are correction data of a GNSS augmentation service like PointPerfect provided by u-blox. In another example, the improved cryptographic concept may be applied in a system distributing any kind of high value data with short time validity to a large number of consumers.

The method according to one of the implementations described may be provided as a computer program product that can be stored on a non-volatile storage medium. The computer program product comprising instructions which, when executed on two or more processors of at least a provider device and a receiver device, can cause the two or more processors to perform the method according to any of the various implementations described above.

BRIEF DESCRIPTION OF DRAWINGS

The improved cryptographic concept will be explained in more detail in the following with the aid of the drawings. Elements and functional blocks having the same or similar function bear the same reference numerals throughout the drawings. Hence their description is not necessarily repeated in following drawings.

In the drawings:

Figure 1    shows an example implementation of a one-to-many communication network;

Figure 2    shows an example implementation of a method for authenticatable data transmission;

Figure 3    shows an example of data being transmitted in the one-to-many communication network; and

Figure 4    shows a further example of data being transmitted in the one-to-many communication network.

DETAILED DESCRIPTION

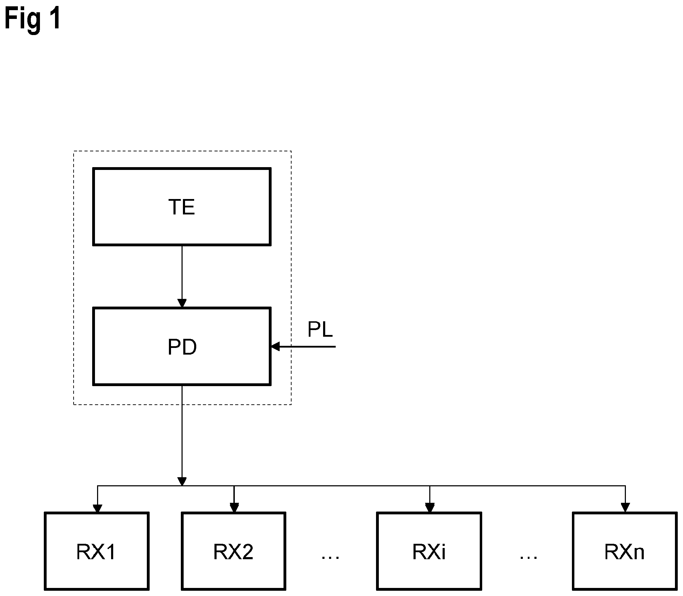

Figure 1 shows an example implementation of a one-to-many communication network, e.g. implemented as a broadcast communication network or multicast communication network using IP or non-IP protocols. A primary purpose of such a network is to allow authenticatable data transmission of payload data PL over a one-to-many communication channel from a server side to a client side. In this example implementation, the server side comprises a trusted entity TE and a provider device PD that may or may not be implemented together in a single device or server instance. A trusted entity TE is more secure than a provider device PD for the generation and storing of keys as it may be based on hardware security module, HSM, technology with true random generators, TRNG, and Root-of-Trust, RoT, -protected memory. The trusted entity TE and the provider device PD may communicate via a secure communication channel using for example a standard TLS/DTLS/OSCORE or QUIC secure transport protocol and mutual authentication.

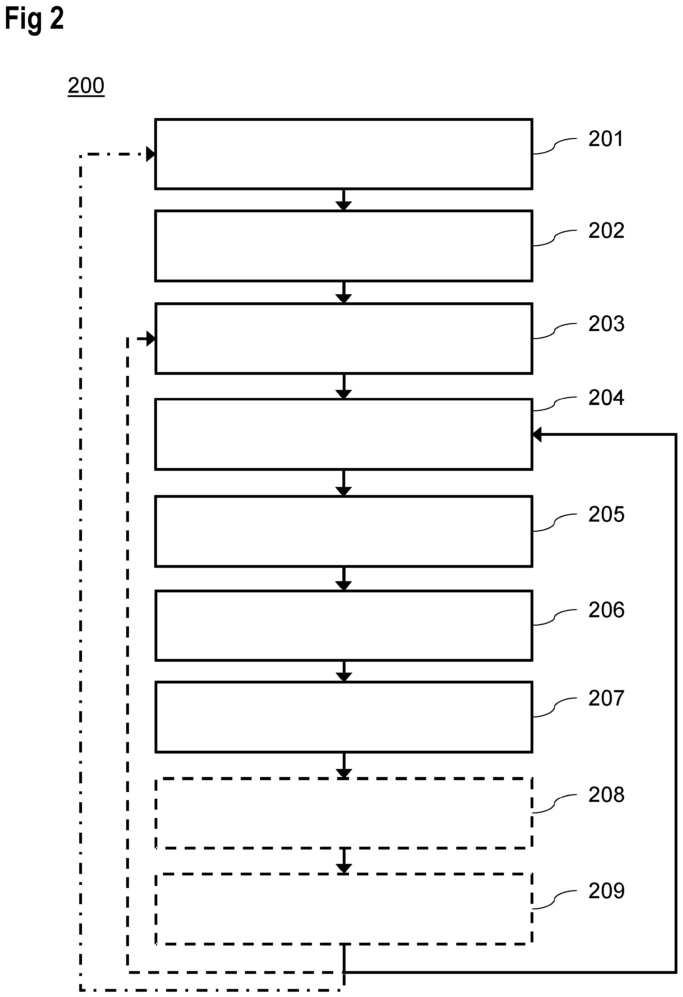

The payload data PL may have a short term validity and for example originate from a backend system coupled to the provider device PD or from the provider device PD itself. On the client side there are several receiver devices RX1, RX2, RXi, RXn, such that, for example, n different devices are recipients of data sent via the one-to-many communication channel. In order to allow authenticatable data transmission of the payload data PL, key pairs with private and public keys may be employed to generate, with the private keys, signatures to be transmitted along with the data via the one-to-many communication channel, which then may be authenticated employing the corresponding public keys. Details of the improved cryptographic concept employed in the one-to-many communication network will be explained in the following in conjunction with Figure 2.

Figure 2 shows an example implementation of a method 200 for authenticatable data transmission via a one-to-many communication channel from the provider device PD to one or more receiver devices, as shown in Figure 1.

In step 201 a first key pair comprising a first private key and a first public key and supporting bilinear pairings, for example asymmetric bilinear pairings, is generated based on a first generator P selected from a first cyclic group $G_1$ of a first order q and on a second generator Q selected from a second cyclic group $G_2$ of the first order q different to the first cyclic group $G_1$. In the following it is assumed that the first order q is a first prime order q. However, in alternative implementations, the first order q may also be a non-prime order.

The first private key is based on a random number in an interval ]0;q-1] and the first public key is computed using the second generator Q and the first private key. The first key pair may be generated in the trusted entity TE or in the provider device PD and is obtained by or stored in the provider device PD. Furthermore, the first public key is provided to the one or more receiver devices. For example, the trusted entity TE or the provider device PD distributes the first public key to the one or more receiver devices individually in a one-to-one communication channel using for example a standard TLS/DTLS/OSCORE or QUIC secure transport protocol and mutual authentication or only server-side authentication. In alternative, this can, for example, be done using a one-to-many communication channel as anyway it is public content. It may be beneficial if the receiver device can be sure it is using a public key from a legitimate service provider.

In step 202 one or more second key pairs, each comprising a respective second private key and a respective second public key and supporting bilinear pairings, e.g. asymmetric bilinear pairings, based on a second order q' smaller than the first order q is generated in the trusted entity TE or in the provider device PD. The trusted entity TE may generate and store a plurality of second key pairs, which then can be obtained together or one by one by the provider device PD. Like for the first order q, in the following it is assumed that the second order q' is a second prime order q'. However, in alternative implementations, the second order q' may also be a non-prime order.

In step 203 the provider device PD selects one of the one or more second key pairs. In step 204 one or more messages of a first type are obtained by the provider device PD. For example, the one or more messages of the first type carry payload data PL to be transmitted from the provider device PD to the one or more receiver devices.

In step 205 the provider device PD generates a respective hash for each of the one or more messages of the first type. Such hash may be a keyed hash, a cryptographic hash, a HMAC, a Cipher-based Message Authentication Code, CMAC, or be based any other hash function. Generation of the hashes may include some kind of truncation in order to reduce the number of bits to be transmitted.

Still in step 205, the provider device PD then composes an authentication message including the generated hashes and either the second public key of the selected second key pair or data adapted for deriving the second public key of the selected second key pair. The composed authentication message is signed by the provider device PD employing the first private key for producing a signed aggregated authentication message. The signed aggregated authentication message is then distributed by the provider device PD via the one-to-many communication channel to the one or more receiver devices.

After distributing the signed aggregated authentication message, in step 206 the provider device PD distributes via the one-to-many communication channel the one or more messages of the first type to the one or more receiver devices.

Furthermore after distributing the signed aggregated authentication message, in step 207 the provider device PD generates or obtains one or more messages of a second type and signs the one or more messages of the second type employing the second private key of the selected second key pair for creating an associated signature. The provider device PD then distributes to the one or more receiver devices, via the one-to-many communication channel, the one or more messages of the second type together with the respective associated signature, in particular for each message.

It should be noted that after distributing the signed aggregated authentication message there is no defined sequence of transmission of the messages of the first and the second type. For example, the messages of the second type are transmitted in between the messages of the first type. For example, steps 206 and 207 may be performed in parallel. More generally, the various actions in the method steps described above can be performed in an arbitrary order unless a specific order is required by causality for single operations.

As mentioned above, generation of the key pairs, e.g. in steps 201 and 202, can be performed in the trusted entity TE or the provider device PD, if no dedicated trusted entity TE is available or the provider device PD also fulfills the function of the trusted entity TE. Generation of the various messages may be performed by the provider device PD or by an external backend system. However, distribution of the various messages, e.g. in steps 206 and 207 is performed by the provider device PD.

It should be further noted that the above described procedure in steps 201 to 207 allows a receiver device of the one or more receiver devices to immediately authenticate after reception both the messages of the first type and the messages of the second type.

For example, in optional step 208 the receiver device authenticates the signed aggregated authentication message employing the first public key, and then authenticates the one or more messages of the first type employing the respective hashes distributed with the signed aggregated authentication message. Authentication of the one or more messages of the first type may include respective hash operations on the messages received and comparing the result of those hash operations with the hashes contained in the signed aggregated authentication message.

In optional step 209 the receiver device further derives the second public key of the selected second key pair from the signed aggregated authentication message and authenticates the one or more messages of the second type employing the associated signature and the second public key of the selected second key pair.

The generation and distribution of messages as described in conjunction with steps 204 to 209 can be performed repeatedly, for instance over multiple epochs, as indicated by the jump back to step 204 in Figure 2. An epoch may span the processes described in steps 204 to 208 or 209, respectively. For example, if further payload data are to be transmitted, e.g. in a subsequent epoch, they can be made authenticatable with respective new hashes for the messages of the first type and respective signatures for the messages of the second type.

For example, it is possible for the provider device to use the same selected second key pair across multiple epochs and it is also possible that the one or more first public keys are distributed to the receiver devices only once in their lifetime or every defined or random number of epochs. However, due to the reduced security level of the second key pairs resulting from the smaller prime order q', the risk of the selected second key pair being broken by an attacker increases over time, in particular starting with the first usage or transmission of the second public key of a selected second key pair. Hence, after a given time, which mainly depends on the actually chosen security level and may be called a crypto period, the selected second key pair may not be regarded safe anymore. Therefore, instead of jumping back to step 204, it can be jumped back to step 203, indicated by the dashed line, such that another second key pair of the one or more second key pairs is obtained and/or selected, wherein each selected second key pair distinguishes from any selected second key pair of preceding repetitions. This newly selected second key pair for example initiates a new crypto period.

Like for the second key pairs also the first key pairs, despite having a higher security level, may have to be regarded not safe anymore after some time, such that an attacker could possibly compromise signatures, for example. Hence, the method 200 can be completely started over by returning back to step 201, indicated by the dashed-dotted line in Figure 2. Accordingly, the process of key generation for both the first key pair (step 201) and the second key pairs can be initiated again.

For example, the first key pair is generated repeatedly with a first repetition rate and subsequently stored in the provider device PD, each generated first key pair distinguishing from the first key pair of a preceding repetition, and selecting one of the one or more second key pairs is performed with a second repetition rate that is higher than the first repetition rate, e.g. by a factor of at least 100, each selected second key pair distinguishing from any selected second key pair of preceding repetitions.

For example, if the first key pair is generated with a first repetition rate and the second key pair is selected with a second repetition rate that is higher than the first repetition rate, the lifetime, also called crypto period, of each second key pair can be limited with little effort.

If obtaining the one or more second key pairs consists of obtaining a single second key pair, obtaining the one or more second key pairs and selecting the one of the one or more second key pairs may be performed with the second repetition rate. This may for example apply, if the selected second public key is directly included in the signed aggregated authentication message SAAM, i.e. in un-encrypted form.

If obtaining the one or more second key pairs consists of obtaining more than one second key pair, e.g. a plurality of second key pairs, selecting the one of the one or more second key pairs may be performed with the second repetition rate and obtaining the one or more second key pairs may performed with the first repetition rate or with a third repetition rate that is higher than the first repetition rate and lower than the second repetition rate. This may for example apply, if data adapted for deriving the selected second public key is included in the signed aggregated authentication message SAAM, e.g. the dedicated symmetric security key.

For example, the first repetition rate for generating the first key pair is 31 days, while the second repetition rate for selecting the second key pair is between 30 seconds and 18,000 seconds, respectively five hours as non-limiting examples. These numbers may result in a ratio between first and second repetition rate between 148.8 and 89,280.

For example, the predefined security level for the asymmetric bilinear pairings is based on the elliptic curves selected. For example, Barreto-Naehrig curves or Barreto-Lynn-Scott curves could be used, parameterized to provide at least a given number of bits of security strength, like 64 bits or more.

This is, for example, useful if the one-to-many communication channels are unidirectional satellite channels with a low data rate in the range of a few kilobits per second. Hence, only having to provide keys and signatures with a limited number of bits over the communication channel preserves resources. For example, the improved cryptographic concept may be applied in a positioning system like a GNSS positioning system, where the payload data e.g. are correction data of a GNSS augmentation service like PointPerfect provided by u-blox.

For example, the messages of the first type may be in PointPerfect using the standardized SPARTN format, including messages related to OCB (orbit, clock, bias), HPAC (high precision atmosphere correction), GAD (geographic area definition), to name only a few. The messages of the second type may be OCB-Clock-Only messages in PointPerfect using the SPARTN format.

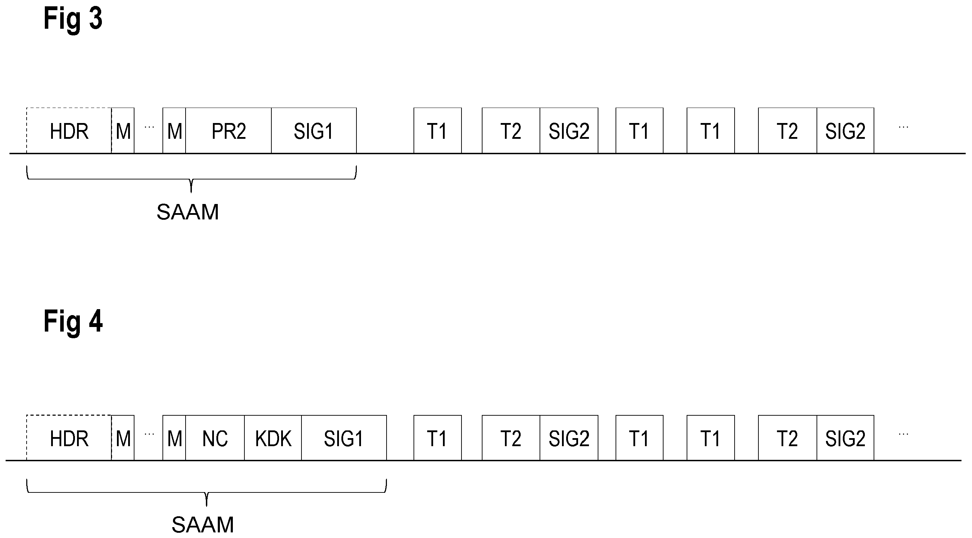

Referring now to Figure 3, an example of data being transmitted in the one-to-many communication network is shown. For example, the data correspond to one epoch. As mentioned before, one or more messages T1 of the first type have been generated or obtained and are to be transmitted. For each of these messages of the first type, a hash M has been generated that is part of the signed aggregated authentication message SAAM. The signed aggregated authentication message SAAM further includes the second public key PR2 of the selected second key pair, followed by the signature SIG1 employing the first private key, as described above.

It should be noted that the same reference sign M is chosen for all hashes, despite their content or value being different for different messages. For example, the hashes M may be HMACs being the result of a truncated HMAC-SHA256 or HMAC-SHA224 of the respective message, computed with a key derived from some predefined fields of the aggregated authentication message SAAM, in particular of the second public key PR2.

An optional control section or header section HDR may be also included in the signed aggregated authentication message SAAM. The control section HDR may include information on at least one of:

- a key to be used for generating the hashes, e.g. which parts of the aggregated authentication message, like the public key PR2 or the nonce NC and/or the dedicated symmetric security key KDK, should be used to define the key used in the keyed hash function;
- the hash function to be used for generating the hashes, e.g. HMAC-SHA256 or HMAC-SHA224;
- a number of rounds to be used for generating the hashes, e.g. how often the hash function is applied to generate the final hash;
- a truncation level to be used for generating the hashes, e.g. how many bits of an initial result of the hash function should be used;
- a curve used for generating the first and/or second key pairs.

The chosen hash function, the number of rounds and the truncation level can control the security level of the complete hash generation operation. If not included in a control section HDR, these may be pre-defined between provider device PD and receiver device(s).

When the signed aggregated authentication message SAAM is transmitted, the receiver device has all the information needed for authenticating this subsequently following messages of the first and the second type. Accordingly, in this example a message T1 of the first type, a message T2 of the second type together with the associated signature SIG2 and two further messages T1 of the first type are transmitted. A greater number of messages of the first type and the second type could follow the signed aggregated authentication message SAAM, which will be appreciated by the skilled reader. For example, the signed aggregated authentication message SAAM together with the messages of the first type and the second type forms an epoch.

Referring now to Figure 4, a further example of data being transmitted in the one-to-many communication network is shown. It particularly distinguishes from the example of Figure 3 only by the implementation of the signed aggregated authentication message SAAM. For example, the data correspond to one epoch. As mentioned above the authentication message includes either the second public key of the selected second key pair, as shown in Figure 3, or data adapted for deriving the second public key of the selected second key pair, and optionally the control section or header section HDR. For example, each second public key of a subset of a plurality of second key pairs has been encrypted with a dedicated symmetric security key KDK, and the encrypted second public keys are distributed, for example by the provider device PD or the trusted entity TE, to the one or more receiver devices individually in a one-to-one communication channel using for example a standard TLS/DTLS/OSCORE or QUIC secure transport protocol and mutual authentication or only server-side authentication. In alternative, this can, for example, be done using a one-to-many communication channel as anyway it is encrypted public content. It may be beneficial if the receiver device can be sure it is using a second public key from a legitimate service provider. Hence the one or more receiver devices have the subset of second public keys available in an encrypted form.

The authentication message is selectively either composed with the second public key of the selected second key pair, like in Figure 3, or the data adapted for deriving the second public key of the selected second key pair, wherein the data comprise a nonce NC and the dedicated symmetric security key KDK for the decryption of the encrypted second public key, like in the example of Figure 4. In each case the receiver device is able to authenticate the messages of the first and the second type. It should be noted that deriving the second public key here corresponds to the decryption of the encrypted second public key. Like for the unencrypted transmission of the second public key, also the transmission of the symmetric security keys KDK results in a limited life time or crypto period of the respective encrypted second public key, such that selection of another second key pair is recommended after a given time.

Similar to the example of Figure 3, the hashes M may be HMACs being the result of a truncated HMAC-SHA256 or HMAC-SHA224 of the respective message, computed with a key derived from some predefined fields of the aggregated authentication message SAAM, in particular of the nonce NC and the dedicated symmetric security key KDK. Such definition may be predefined or included in the header section HDR.

The nonce NC is a field of defined bit-length that the provider device changes each epoch, i.e. with each new signed aggregated authentication message SAAM. It avoids that an attacker uses the whole period in which the same symmetric security key KDK is used in subsequent aggregated authentication messages to try to find MAC pre-images to forge messages of the first type.

In subsequent epochs it can be arbitrarily selected between a message scheme as in the example of Figure 3 or as in the example of Figure 4. The selection may be recognizable by the receiver device, or may be included in the header section HDR. If one of the encrypted second public keys is used as in the example of Figure 4, an index to the used second public key may be included in the header section HDR.

While in the above description the improved cryptographic concept has been described in a general fashion, specific example implementations are to follow, in particular with respect to the cryptographic schemes that may be used for the single operations. Furthermore it may be assumed that a one-to-many communication channel with limited bandwidth is used, e.g. a satellite link.

In some implementations signing the composed authentication message and/or signing the one or more messages of the second type is based on a short signature scheme, which produces respective signatures corresponding to a respective single elliptic curve point. This allows receivers to authenticate a signature with only one bilinear pairing. For example, signing is based on a pairing-friendly Barreto-Naehrig, BN, curve or a pairing-friendly Barreto-Lynn-Scott curve.

Such cryptographic scheme may be based on a Type-III pairing scheme, which particularly defines an asymmetric pairing scheme with first and second cyclic groups $G_1$ and $G_2$ being different, i.e. one of them is smaller than the other. Using Type III asymmetric bilinear pairings results in the bilinear pairing operator $e: \mathbb{G}_1 \times \mathbb{G}_2 \to \mathbb{G}_T$.

The Type-III pairing scheme may be used for both the first key pair(s) and the plurality of second key pairs. However, one can further save bandwidth in the one-to-many communication channel by employing two authentication keys: a *short-term authentication key* which has a moderately low security level so it is efficient in bandwidth consumption, and a *long-term authentication key* which has full security. In the disclosure above, the keys of the second key pair(s) correspond to such *short-term authentication keys,* while the keys of the first key pair(s) correspond to such *long-term authentication keys.* The short-term authentication key is employed for signing the messages of the second type, and it may be renewed at moderately short periods (e.g., up to few hours) to avoid that an active adversary has enough time to break it. It is distributed inside the aggregated authentication message, e.g. via satellite link, or pre-distributed in encrypted form, as described in more detail above. The long-term authentication key is employed for signing the aggregated authentication messages, and it may be renewed at long periods (e.g., once a month or once every few years). It may be distributed through a secure mutually or server-only authenticated connection or using a one-to-many communication channel as described in more details above.

The Type-III pairing scheme may have the following parameters:

$$\{q, G_1, G_2, G_T, e: G_1 \times G_2 \to G_T, P \in G_1, Q \in G_2, H: \{0,1\}^* \to Z_q\},$$

where q is the prime order of the cyclic groups $G_1$ and $G_2$. P is a random generator of $G_1$ and Q is a random generator of $G_2$. H can be a classic hash function, whose output is moduled q to generate values in $Z_q$.

The scheme may include three algorithms:

**Key generation.** Take a random $x \in Z_q^*$ (*private key*); compute $P_{pub} = x \cdot Q \in G_2$ (*public key*). Private key *x* and public key $P_{pub}$ form a key pair, e.g. the first key pair or one of the plurality of second key pairs.

**Sign.** Given a message m $\in$ {0,1}* and a private key $x \in Z_q^*$, compute the signature $S = \frac{1}{H(m)+x} \cdot P \in G_1$. The message m may be a message of the first or of the second type.

**Verify/Authenticate.** Given a message $m \in \{0,1\}^*$, a public key $P_{pub} \in G_2$, and a signature $S \in G_1$, check whether $e(S, H(m) \cdot Q + P_{pub}) = e(P, Q)$. Note that the second term of the comparison (in $G_T$) can be precomputed to save processing power. If this is the case, the verify algorithm employs ($Z_q$) a hash into $G_2$, (ii) a multiplication in $G_2$, (iii) a sum in $G_2$, (iv) a pairing.

The following is the correctness proof of the scheme.

$$e\big(S, H(m) \cdot Q + P_{pub}\big)$$

$$= e\left(\frac{1}{H(m)+x} \cdot P, H(m) \cdot Q + x \cdot Q\right)$$

$$= e(P, Q)^{\frac{H(m)+x}{H(m)+x}} = e(P, Q).$$

The bit-length of the BN elliptic curve coordinates employed by the long-term authentication key may be fixed at 256, obtaining approximately a 100-bit security level. The following table shows a comparison between a possible long-term key and a possible short term-key with the $Z_q$, $G_1$, $G_2$, $G_T$ element sizes and the security levels of the IETF-standardized BN_P256 library, i.e. a BN curve on a 256-bit prime field, and a non-standardized BN_P128, i.e. a BN curve on a 128-bit prime field.

| | Long-term key Nominal IETF BN_P256 | Short term key BN_P128 |
|---|---|---|
| Security Bits | ~100 | ~64 |
| Field (bits) | 256 | 128 |
| Size in bits of $G_1$ elements (short signature as Field+1) | 257 | 129 |
| Size in bits of $G_2$ elements (public key as Field*2+1) | 513 | 257 |
| Size in bits of $G_T$ elements (pairing result as Field*12) | 3072 | 1536 |
| Size in bits of $Z_q$ elements | 256 | 128 |

In the $G_T$ calculus the same embedding degree is used for both the long-term key and the short-term key but actually it may be possible to allow the reduction of the embedding degree of the short-term key from 12 to 10 without impacting the security level. In this case the $G_T$ elements of the short-term key would have a size of 1280 bits (16.67% lower than 1536 bits).

As a further bandwidth saving technique, the provider device may have the possibility to pre-distribute some of the short-term authentication keys, i.e. the public keys of a subset of the plurality of second keys to avoid sending them on the one-to-many communication channel, e.g. the satellite link. In order to prevent an attacker to start trying to break the short-term authenticated key as soon as it is pre-distributed, this can be encrypted, e.g. with a 128-bit AES key. The relative decryption key (key decryption key) is a symmetric key, which must be sent by the provider device through the one-to-many communication channel just before starting to sign messages with the short-term authenticated key. This e.g. corresponds to the example implementation shown in Figure 4. The provider device PD may provide means to the receiver device to select the encrypted short-term authentication key of the set pre-distributed, for decrypting with the dedicated symmetric key KDK, from the aggregated authentication message (key index or auto-determination). Such information may be included in the header section HDR.

In order to actually save bandwidth, a key decryption key must be shorter than a short-term authentication key. The operation of sending a key decryption key for the first time is referred as the key opening. After the key opening, the short-term authentication key can be used to sign messages for at most the short-term crypto period, in order not to give the attacker too much time to break it. For each epoch, e.g. a 30 s time frame, the provider device can decide to send a new short-term authentication key on the one-to-many communication channel or to use the pre-distributed one. The more pre-distributed keys it uses, the more bandwidth in the one-to-many communication channel it will save, but the more storage capacity on the receiver devices is needed.

In some implementations, a receiver device can reject messages authenticated by a short-term key beyond its crypto period. Such crypto period may be predefined or included in the header section HDR.

It should be apparent to the skilled reader that devices involved in operation of the improved cryptographic concept like trusted entity, provider device and receiver devices, each may be equipped with some kind of processor and associated memory, volatile and/or non-volatile, for storing instructions to carry out the respective method steps and for storing keys, payload data etc. as needed. The improved cryptographic concept particularly allows to keep the processor and memory requirements on the client side, i.e. the receiver devices as small as possible, while keeping memory intensive operations to the server side. Furthermore, it should be apparent to the skilled reader which steps in a method according to the improved cryptographic concept are to be performed by which entity such that at this portion of the disclosure it is referred to the summary of invention.

Various embodiments of the improved cryptographic concept can be implemented in the form of logic in software or hardware or a combination of both. The logic may be stored in a computer readable or machine-readable storage medium as a set of instructions adapted to direct one or more processors of a (distributed) computer system to perform a set of steps disclosed in embodiments of the improved cryptographic concept. The logic may form part of a computer program product adapted to direct an information-processing device to automatically perform a set of steps disclosed in embodiments of the improved cryptographic concept.

The specification and drawings are, accordingly, to be regarded in an illustrative rather than a restrictive sense. However, it will be evident that various modifications and changes may be made thereunto without departing from the scope of the invention as set forth in the claims.

LIST OF REFERENCE SIGNS

| | |
|---|---|
| TE | trusted entity |
| PD | provider device |
| RX1, RX2, RXi, RXn | receiver device |
| PL | payload data |
| 400 | method |
| 401-409 | method steps |
| SAAM | signed aggregated authentication message |
| HDR | control section |
| M | hash |
| PR2 | second public key |
| SIG1, SIG2 | signature |
| T1 | message of first type |
| T2 | message of second type |
| NC | nonce |
| KDK | security key |

**Claims**

1. A method for authenticatable data transmission via a one-to-many communication channel from a provider device to a receiver device, the method comprising

- obtaining, by the provider device (PD), a first key pair comprising a first private key and a first public key and supporting bilinear pairings, in particular asymmetric bilinear pairings, based on a first generator P selected from a first cyclic group $G_1$ of a first order q and on a second generator Q selected from a second cyclic group $G_2$ of the first order q, wherein the first private key is based on a random number in an interval $]0;q-1]$ and the first public key is computed using the second generator Q and the first private key;
- obtaining, by the provider device (PD), one or more second key pairs, each comprising a respective second private key and a respective second public key and supporting bilinear pairings, in particular asymmetric bilinear pairings, based on a second order q' smaller than the first order q;
- providing the first public key to the receiver device;
- selecting, by the provider device (PD), one of the one or more second key pairs;
- obtaining, by the provider device (PD), one or more messages of a first type;
- generating, by the provider device (PD), a respective hash for each of the one or more messages of the first type;
- composing, by the provider device (PD), an authentication message including the generated hashes and either the second public key of the selected second key pair or data adapted for deriving the second public key of the selected second key pair;
- signing, by the provider device (PD), the composed authentication message employing the first private key for producing a signed aggregated authentication message;
- distributing, by the provider device via the one-to-many communication channel, the signed aggregated authentication message to the receiver device;
- after distributing the signed aggregated authentication message, distributing, by the provider device (PD) via the one-to-many communication channel, the one or more messages of the first type to the receiver device;
- after distributing the signed aggregated authentication message, obtaining, by the provider device (PD), one or more messages of a second type;
- signing, by the provider device (PD), the one or more messages of the second type employing the second private key of the selected second key pair for creating an associated signature; and
- distributing, by the provider device via the one-to-many communication channel, the one or more messages of the second type together with the associated signature to the receiver device.

2. The method according to claim 1, further comprising

- authenticating, by the receiver device, the signed aggregated authentication message employing the first public key;
- authenticating, by the receiver device, the one or more messages of the first type employing the respective hashes distributed with the signed aggregated authentication message;
- deriving, by the receiver device, the second public key of the selected second key pair from the signed aggregated authentication message; and
- authenticating, by the receiver device, the one or more messages of the second type employing the associated signature and the derived second public key of the selected second key pair.

3. The method according to claim 1 or 2, further comprising

- encrypting each second public key of a subset of the one or more second key pairs with a dedicated symmetric security key (KDK); and
- providing the encrypted second public keys to the receiver device, in particular before generating the messages of the second type; wherein
- the authentication message is selectively either composed with the second public key of the selected second key pair or the data adapted for deriving the second public key of the selected second key pair; and
- the data comprise a nonce and the dedicated symmetric security key (KDK) for the decryption of the encrypted second public key.

4. The method according to one of claims 1 to 3, wherein

- the first key pair is generated, by the provider device (PD) or a trusted entity, repeatedly with a first repetition rate and subsequently stored in the provider device (PD), each generated first key pair distinguishing from the first key pair of a preceding repetition; and
- selecting the one of the one or more second key pairs is performed with a second repetition rate that is higher than the first repetition rate, in particular by a factor of at least 100, each selected second key pair distinguishing from any selected second key pair of preceding repetitions.

**5.** The method according to claim 4, wherein

- if obtaining the one or more second key pairs consists of obtaining a single second key pair, obtaining the one or more second key pairs and selecting the one of the one or more second key pairs is performed with the second repetition rate; and
- if obtaining the one or more second key pairs consists of obtaining more than one second key pair, selecting the one of the one or more second key pairs is performed with the second repetition rate and obtaining the one or more second key pairs is performed with the first repetition rate or with a third repetition rate that is higher than the first repetition rate and lower than the second repetition rate.

**6.** The method according to one of claims 1 to 5, wherein signing the composed authentication message and/or signing the one or more messages of the second type is based on a short signature scheme, in particular using a pairing-friendly Barreto-Naehrig curve or Barreto-Lynn-Scott curve, the short signature scheme producing respective signatures corresponding to a respective single elliptic curve point.

**7.** The method according to claim 6, wherein signing the composed authentication message and/or signing the one or more messages of the second type is based on a Type-III pairing scheme defined as:

$$\{q,\ G_1,\ G_2,\ G_T,\ e\colon G_1 \times G_2 \to G_T,\ P \in G_1,\ Q \in G_2,\ H\colon\{0,1\}^* \to Z_q\},$$

wherein $G_T$ is a multiplicative paired group, H defines a cryptographic hash function for generating a field $Z_q$, x is a private key selected randomly from the field $Z_q$, and wherein a signature S for a message m is computed according to

$$S = \frac{1}{H(m) + x} \cdot P \in G_1.$$

**8.** The method according to one of claims 1 to 7, wherein the hashes are generated based on an intermediate key derived from at least parts of the composed authentication message.

**9.** The method according to one of claims 1 to 8, wherein each hash is a keyed hashed message authentication code.

**10.** The method according to claim 8 or 9, wherein the composed authentication message further includes a control section including information on at least one of

- a key to be used for generating the hashes;
- a hash function to be used for generating the hashes;
- a number of rounds to be used for generating the hashes;
- a truncation level to be used for generating the hashes.

**11.** A computer program product comprising instructions which, when executed on two or more processors of at least a provider device and a receiver device, cause the two or more processors to perform the method according to any of claims 1 to 10.

**12.** A provider device (PD) for a one-to-many communication network, wherein

- a first key pair comprising a first private key and a first public key and supporting bilinear pairings, in particular asymmetric bilinear pairings, is generated by the provider device (PD) or a trusted entity based on a first generator P selected from a first cyclic group $G_1$ of a first order q and on a second generator Q selected from a second cyclic group $G_2$ of the first order q, wherein the first private key is based on a random number in an interval ]0;q-1] and the first public key is computed using the second generator Q and the first private key;
- the first public key is provided to a receiver device;
- one or more second key pairs, each comprising a respective second private key and a respective second public key and supporting bilinear pairings, in particular asymmetric bilinear pairings, based on a second order q' smaller than the first order q are generated by the provider device (PD) or the trusted entity;

the provider device being configured to

- obtain the first key pair and the one or more second key pairs;
- obtain one or more messages of a first type;
- select one of the one or more second key pairs;
- generate a respective hash for each of the one or more messages of the first type;
- compose an authentication message including the generated hashes and either the second public key of the selected second key pair or data adapted for deriving the second public key of the selected second key pair;
- sign the composed authentication message employing the first private key for producing a signed aggregated authentication message;
- distribute, via a one-to-many communication channel, the signed aggregated authentication message to the receiver device;
- distribute, via the one-to-many communication channel after distributing the signed aggregated authentication message, the one or more messages of the first type to the receiver device;
- obtain, after distributing the signed aggregated authentication message, one or more messages of a second type;
- sign the one or more messages of the second type employing the second private key of the selected second key pair for creating an associated signature; and
- distribute, via the one-to-many communication channel, the one or more messages of the second type together with the associated signature to the receiver device.

13. The provider device (PD) according to claim 12, wherein

- each second public key of a subset of the plurality of second key pairs is encrypted with a dedicated symmetric security key (KDK) and distributed to the receiver device, in particular before the messages of the second type are generated;
- the authentication message is selectively either composed with the second public key of the selected second key pair or the data adapted for deriving the second public key of the selected second key pair; and
- the data comprise a nonce and the dedicated symmetric security key (KDK) for the second public key.

14. A receiver device for a one-to-many communication network, wherein

- a first key pair comprising a first private key and a first public key and supporting bilinear pairings, in particular asymmetric bilinear pairings, is generated by a provider device (PD) or a trusted entity based on a first generator P selected from a first cyclic group $G_1$ of a first order q and on a second generator Q selected from a second cyclic group G2 of the first order q, wherein the first private key is based on a random number in an interval ]0;q-1] and the first public key is computed using the second generator Q and the first private key;
- the first public key is provided to the receiver device;
- one or more second key pairs, each comprising a respective second private key and a respective second public key and supporting bilinear pairings, in particular asymmetric bilinear pairings, based on a second order q' smaller than the first order q are generated by the provider device (PD) or the trusted entity;
- one or more messages of a first type are obtained by the provider device (PD);
- one of the one or more second key pairs is selected by the provider device (PD);
- a respective hash is generated by the provider device (PD) for each of the one or more messages of the first type;
- an authentication message is composed by the provider device (PD) including the generated hashes and either the second public key of the selected second key pair or data adapted for deriving the second public key of the selected second key pair;
- the composed authentication message is signed by the provider device (PD) employing the first private key for producing a signed aggregated authentication message;
- one or more messages of a second type are obtained by the provider device (PD);
- the one or more messages of the second type are signed by the provider device (PD) employing the second private key of the selected second key pair for creating an associated signature;

the receiver device being configured to

- store the first public key;
- receive, from the provider device (PD) via a one-to-many communication channel, the signed aggregated authentication message;
- authenticate the signed aggregated authentication message employing the first public key;
- derive the second public key of the selected second key pair from the signed aggregated authentication message;
- receive, from the provider device (PD) via the one-to-many communication channel, the one or more messages of the first type;
- authenticate the one or more messages of the first type employing the respective hashes distributed with the signed aggregated authentication message;
- receive, from the provider device (PD) via the one-to-many communication channel, the one or more messages of the second type together with the associated signature; and
- authenticate the one or more messages of the second type employing the associated signature and the derived second public key of the selected second key pair.

15. A communication system for a one-to-many communication network, the communication system comprising a provider device according to claim 12 or 13 and a receiver device according to claim 14.

**Patentansprüche**

1. Verfahren zur authentifizierbaren Datenübertragung über einen Eins-zu-Viele-Kommunikationskanal von einem Bereitstellungsgerät zu einem Empfängergerät, wobei das Verfahren umfasst:

- Beziehen durch das Bereitstellungsgerät (PD) eines ersten Schlüsselpaars, das einen ersten privaten Schlüssel und einen ersten öffentlichen Schlüssel umfasst und bilineare Paarungen, insbesondere asymmetrische bilineare Paarungen, unterstützt, basierend auf einem ersten Generator P, der aus einer ersten zyklischen Gruppe G1 erster Ordnung q ausgewählt ist, und einem zweiten Generator Q, der aus einer zweiten zyklischen Gruppe G2 der ersten Ordnung q ausgewählt ist, wobei der erste private Schlüssel auf einer Zufallszahl in einem Intervall ] 0;q-1] basiert und der erste öffentliche Schlüssel unter Verwendung des zweiten Generators Q und des ersten privaten Schlüssels berechnet wird;
- Beziehen eines oder mehrerer zweiter Schlüsselpaare durch das Bereitstellungsgerät (PD), das jeweils einen entsprechenden zweiten privaten Schlüssel und einen entsprechenden zweiten öffentlichen Schlüssel umfasst und bilineare Paarungen, insbesondere asymmetrische bilineare Paarungen, basierend auf einer zweiten Ordnung q' unterstützt, die kleiner als die erste Ordnung q ist;
- Bereitstellen des ersten öffentlichen Schlüssels für das Empfängergerät;
- Auswählen eines der einen oder mehreren zweiten Schlüsselpaare durch das Bereitstellungsgerät (PD);
- Beziehen einer oder mehrerer Nachrichten eines ersten Typs durch das Bereitstellungsgerät (PD);
- Erzeugen eines jeweiligen Hashwerts für jede der einen oder mehreren Nachrichten des ersten Typs durch das Bereitstellungsgerät (PD);
- Erstellen einer Authentifizierungsnachricht durch das Bereitstellungsgerät (PD), die die erzeugten Hashes und entweder den zweiten öffentlichen Schlüssel des ausgewählten zweiten Schlüsselpaars oder Daten enthält, die zur Ableitung des zweiten öffentlichen Schlüssels des ausgewählten zweiten Schlüsselpaars geeignet sind;
- Signieren der erstellten Authentifizierungsnachricht durch das Bereitstellungsgerät (PD) unter Verwendung des ersten privaten Schlüssels, um eine signierte aggregierte Authentifizierungsnachricht zu erzeugen;
- Verteilen der signierten aggregierten Authentifizierungsnachricht durch das Bereitstellungsgerät über den Eins-zu-Viele-Kommunikationskanal an das Empfängergerät;
- nach dem Verteilen der signierten aggregierten Authentifizierungsnachricht, Verteilen der einen oder mehreren Nachrichten des ersten Typs durch das Bereitstellungsgerät (PD) über den Eins-zu-Viele-Kommunikationskanal an das Empfängergerät;
- nach dem Verteilen der signierten aggregierten Authentifizierungsnachricht, Beziehen einer oder mehrerer Nachrichten eines zweiten Typs durch das Bereitstellungsgerät (PD);
- Signieren der einen oder mehreren Nachrichten des zweiten Typs durch das Bereitstellungsgerät (PD) unter Verwendung des zweiten privaten Schlüssels des ausgewählten zweiten Schlüsselpaars zum Erstellen einer zugehörigen Signatur; und
- Verteilen der einen oder mehreren Nachrichten des zweiten Typs zusammen mit der zugehörigen Signatur durch das Bereitstellungsgerät über den Eins-zu-Viele-Kommunikationskanal an das Empfängergerät.

2. Verfahren nach Anspruch 1, das ferner umfasst:

- Authentifizieren der signierten aggregierten Authentifizierungsnachricht durch das Empfängergerät unter Verwendung des ersten öffentlichen Schlüssels;
- Authentifizieren der einen oder mehreren Nachrichten des ersten Typs durch das Empfängergerät unter Verwendung der jeweiligen Hashes, die mit der signierten aggregierten Authentifizierungsnachricht verteilt wurden;

- Ableiten des zweiten öffentlichen Schlüssels des ausgewählten zweiten Schlüsselpaars aus der signierten aggregierten Authentifizierungsnachricht durch das Empfängergerät; und

- Authentifizieren der einen oder mehreren Nachrichten des zweiten Typs durch das Empfängergerät unter Verwendung der zugehörigen Signatur und des abgeleiteten zweiten öffentlichen Schlüssels des ausgewählten zweiten Schlüsselpaars.

3. Verfahren nach Anspruch 1 oder 2, das ferner umfasst:

- Verschlüsseln jedes zweiten öffentlichen Schlüssels einer Untergruppe des einen oder der mehreren zweiten Schlüsselpaare mit einem dedizierten symmetrischen Sicherheitsschlüssel (KDK); und

- Bereitstellen der verschlüsselten zweiten öffentlichen Schlüssel an das Empfängergerät, insbesondere vor dem Erzeugen der Nachrichten des zweiten Typs; wobei

- die Authentifizierungsnachricht wahlweise entweder mit dem zweiten öffentlichen Schlüssel des ausgewählten zweiten Schlüsselpaars oder den Daten, die zum Ableiten des zweiten öffentlichen Schlüssels des ausgewählten zweiten Schlüsselpaars angepasst sind, zusammengesetzt ist; und

- die Daten einen Nonce und den dedizierten symmetrischen Sicherheitsschlüssel (KDK) zum Entschlüsseln des verschlüsselten zweiten öffentlichen Schlüssels umfassen.

4. Verfahren nach einem der Ansprüche 1 bis 3, wobei

- das erste Schlüsselpaar vom Bereitstellungsgerät (PD) oder einer vertrauenswürdigen Stelle wiederholt mit einer ersten Wiederholungsrate generiert und anschließend im Bereitstellungsgerät (PD) gespeichert wird, wobei sich jedes generierte erste Schlüsselpaar vom ersten Schlüsselpaar einer vorhergehenden Wiederholung unterscheidet; und

- die Auswahl eines der einen oder mehreren zweiten Schlüsselpaare mit einer zweiten Wiederholungsrate durchgeführt wird, die höher ist als die erste Wiederholungsrate, insbesondere um einen Faktor von mindestens 100, wobei sich jedes ausgewählte zweite Schlüsselpaar von jedem ausgewählten zweiten Schlüsselpaar vorhergehender Wiederholungen unterscheidet.

5. Verfahren nach Anspruch 4, wobei

- wenn das Beziehen des einen oder der mehreren zweiten Schlüsselpaare aus dem Beziehen eines einzelnen zweiten Schlüsselpaares besteht, das Beziehen des einen oder der mehreren zweiten Schlüsselpaare und das Auswählen des einen der einen oder mehreren zweiten Schlüsselpaare mit der zweiten Wiederholungsrate durchgeführt wird; und

- wenn das Beziehen des einen oder der mehreren zweiten Schlüsselpaare aus dem Beziehen von mehr als einem zweiten Schlüsselpaar besteht, das Auswählen des einen der einen oder mehreren zweiten Schlüsselpaare mit der zweiten Wiederholungsrate durchgeführt wird und das Beziehen des einen oder der mehreren zweiten Schlüsselpaare mit der ersten Wiederholungsrate oder mit einer dritten Wiederholungsrate durchgeführt wird, die höher als die erste Wiederholungsrate und niedriger als die zweite Wiederholungsrate ist.

6. Verfahren nach einem der Ansprüche 1 bis 5, wobei das Signieren der zusammengesetzten Authentifizierungsnachricht und/oder das Signieren der einen oder mehreren Nachrichten des zweiten Typs auf einem kurzen Signaturschema basiert, insbesondere unter Verwendung einer paarungsfreundlichen Barreto-Naehrig-Kurve oder Barreto-Lynn-Scott-Kurve, wobei das kurze Signaturschema jeweilige Signaturen erzeugt, die einem jeweiligen einzelnen elliptischen Kurvenpunkt entsprechen.

7. Verfahren nach Anspruch 6, wobei das Signieren der zusammengesetzten Authentifizierungsnachricht und/oder das Signieren der einen oder mehreren Nachrichten des zweiten Typs auf einem Paarungsschema vom Typ III basiert, das wie folgt definiert ist:

$$\{q,\, G_1,\, G_2,\, G_T,\, e\colon G_1 \times G_2 \to G_T,\, P \in G_1,\, Q \in G_2,\, H\colon \{0,1\}^* \to Z_q\},$$

wobei GT eine multiplikative gepaarte Gruppe ist, H eine kryptografische Hash-Funktion zum Erzeugen eines Feldes Zq definiert, x ein zufällig aus dem Feld Zq ausgewählter privater Schlüssel ist und wobei eine Signatur S für eine Nachricht m berechnet wird gemäß

$$S = \frac{1}{H(m) + x} \cdot P \in G_1.$$

8.  Verfahren nach einem der Ansprüche 1 bis 7, wobei die Hash-Werte auf der Grundlage eines Zwischenschlüssels erzeugt werden, der aus mindestens Teilen der zusammengesetzten Authentifizierungsnachricht abgeleitet wird.

9.  Verfahren nach einem der Ansprüche 1 bis 8, wobei jeder Hash-Wert ein verschlüsselter Hash-Nachrichtenauthentifizierungscode ist.

10. Verfahren nach Anspruch 8 oder 9, wobei die zusammengesetzte Authentifizierungsnachricht ferner einen Kontrollabschnitt enthält, der Informationen zu mindestens einem der folgenden Punkte enthält:

    - einem Schlüssel, der zur Erzeugung der Hash-Werte verwendet werden soll;
    - einer Hash-Funktion, die zur Erzeugung der Hash-Werte verwendet werden soll;
    - einer Anzahl von Runden, die zur Erzeugung der Hash-Werte verwendet werden sollen;
    - einem Trunkierungsgrad, der zur Erzeugung der Hash-Werte verwendet werden soll.

11. Ein Computerprogrammprodukt, das Anweisungen umfasst, die, wenn sie auf zwei oder mehr Prozessoren von mindestens einem Bereitstellungsgerät und einem Empfängergerät ausgeführt werden, die zwei oder mehr Prozessoren veranlassen, das Verfahren gemäß einem der Ansprüche 1 bis 10 auszuführen.

12. Ein Bereitstellungsgerät (PD) für ein Eins-zu-Viele-Kommunikationsnetzwerk, wobei

    - ein erstes Schlüsselpaar, das einen ersten privaten Schlüssel und einen ersten öffentlichen Schlüssel umfasst und bilineare Paarungen, insbesondere asymmetrische bilineare Paarungen, unterstützt, vom Bereitstellungsgerät (PD) oder einer vertrauenswürdigen Instanz auf der Grundlage eines ersten Generators P, der aus einer ersten zyklischen Gruppe G1 erster Ordnung q ausgewählt wird, und eines zweiten Generators Q, der aus einer zweiten zyklischen Gruppe G2 der ersten Ordnung q ausgewählt wird, wobei der erste private Schlüssel auf einer Zufallszahl in einem Intervall ]0;q-1] basiert und der erste öffentliche Schlüssel unter Verwendung des zweiten Generators Q und des ersten privaten Schlüssels berechnet wird;
    - der erste öffentliche Schlüssel einem Empfängergerät bereitgestellt wird;
    - ein oder mehrere zweite Schlüsselpaare, die jeweils einen entsprechenden zweiten privaten Schlüssel und einen entsprechenden zweiten öffentlichen Schlüssel umfassen und bilineare Paarungen, insbesondere asymmetrische bilineare Paarungen, basierend auf einer zweiten Ordnung q' unterstützen, von dem Bereitstellungsgerät (PD) oder der vertrauenswürdigen Instanz generiert werden;

    wobei das Bereitstellungsgerät eingerichtet ist,

    - das erste Schlüsselpaar und das eine oder die mehreren zweiten Schlüsselpaare zu beziehen;
    - eine oder mehrere Nachrichten eines ersten Typs zu beziehen;
    - eines der einen oder mehreren zweiten Schlüsselpaare auszuwählen;
    - einen jeweiligen Hash für jede der einen oder mehreren Nachrichten des ersten Typs zu erzeugen;
    - eine Authentifizierungsnachricht zusammenzustellen, die die generierten Hashes und entweder den zweiten öffentlichen Schlüssel des ausgewählten zweiten Schlüsselpaars oder Daten enthält, die zur Ableitung des zweiten öffentlichen Schlüssels des ausgewählten zweiten Schlüsselpaars geeignet sind;
    - die zusammengestellte Authentifizierungsnachricht unter Verwendung des ersten privaten Schlüssels zu signieren, um eine signierte aggregierte Authentifizierungsnachricht zu erzeugen;
    - die signierte aggregierte Authentifizierungsnachricht über einen Eins-zu-Viele-Kommunikationskanal an das Empfängergerät zu verteilen;
    - die eine oder mehrere Nachrichten des ersten Typs nach der Verteilung der signierten aggregierten Authentifizierungsnachricht über den Eins-zu-Viele-Kommunikationskanal an das Empfängergerät verteilen;
    - nach der Verteilung der signierten aggregierten Authentifizierungsnachricht eine oder mehrere Nachrichten eines zweiten Typs zu beziehen;
    - die eine oder mehrere Nachrichten des zweiten Typs unter Verwendung des zweiten privaten Schlüssels des ausgewählten zweiten Schlüsselpaars signieren, um eine zugehörige Signatur zu erstellen; und

- über den Eins-zu-Viele-Kommunikationskanal die eine oder mehreren Nachrichten des zweiten Typs zusammen mit der zugehörigen Signatur an das Empfängergerät verteilen.

13. Das Bereitstellungsgerät (PD) gemäß Anspruch 12, wobei

- jeder zweite öffentliche Schlüssel einer Untergruppe der mehreren zweiten Schlüsselpaare mit einem dedizierten symmetrischen Sicherheitsschlüssel (KDK) verschlüsselt und an das Empfängergerät verteilt wird, insbesondere bevor die Nachrichten des zweiten Typs erzeugt werden;
- die Authentifizierungsnachricht wahlweise entweder mit dem zweiten öffentlichen Schlüssel des ausgewählten zweiten Schlüsselpaars oder mit den Daten, die zur Ableitung des zweiten öffentlichen Schlüssels des ausgewählten zweiten Schlüsselpaars angepasst sind, zusammengestellt wird; und
- die Daten einen Nonce und den dedizierten symmetrischen Sicherheitsschlüssel (KDK) für den zweiten öffentlichen Schlüssel umfassen.

14. Empfängergerät für ein Eins-zu-Viele-Kommunikationsnetzwerk, wobei

- ein erstes Schlüsselpaar, das einen ersten privaten Schlüssel und einen ersten öffentlichen Schlüssel umfasst und bilineare Paarungen, insbesondere asymmetrische bilineare Paarungen, unterstützt, von einem Bereitstellungsgerät (PD) oder einer vertrauenswürdigen Instanz auf der Grundlage eines ersten Generators P, der aus einer ersten zyklischen Gruppe G1 erster Ordnung q ausgewählt wird, und eines zweiten Generators Q, der aus einer zweiten zyklischen Gruppe G2 der ersten Ordnung q ausgewählt wird, wobei der erste private Schlüssel auf einer Zufallszahl in einem Intervall ]0;q-1] basiert und der erste öffentliche Schlüssel unter Verwendung des zweiten Generators Q und des ersten privaten Schlüssels berechnet wird;
- der erste öffentliche Schlüssel an das Empfängergerät übermittelt wird.
- ein oder mehrere zweite Schlüsselpaare, die jeweils einen entsprechenden zweiten privaten Schlüssel und einen entsprechenden zweiten öffentlichen Schlüssel umfassen und bilineare Paarungen, insbesondere asymmetrische bilineare Paarungen, basierend auf einer zweiten Ordnung q' unterstützen, von dem Bereitstellungsgerät (PD) oder der vertrauenswürdigen Instanz generiert werden.
- ein oder mehrere Nachrichten eines ersten Typs vom Bereitstellungsgerät (PD) bezogen werden;
- eines der einen oder mehreren zweiten Schlüsselpaare vom Bereitstellungsgerät (PD) ausgewählt wird;
- ein entsprechender Hash vom Bereitstellungsgerät (PD) für jede der einen oder mehreren Nachrichten des ersten Typs erzeugt wird;
- eine Authentifizierungsnachricht vom Bereitstellungsgerät (PD) zusammengestellt wird, die die erzeugten Hashes und entweder den zweiten öffentlichen Schlüssel des ausgewählten zweiten Schlüsselpaars oder Daten enthält, die zur Ableitung des zweiten öffentlichen Schlüssels des ausgewählten zweiten Schlüsselpaars angepasst sind;
- die zusammengestellte Authentifizierungsnachricht vom Bereitstellungsgerät (PD) unter Verwendung des ersten privaten Schlüssels signiert wird, um eine signierte aggregierte Authentifizierungsnachricht zu erzeugen;
- eine oder mehrere Nachrichten eines zweiten Typs vom Bereitstellungsgerät (PD) bezogen werden;
- die eine oder mehrere Nachrichten des zweiten Typs vom Bereitstellungsgerät (PD) unter Verwendung des zweiten privaten Schlüssels des ausgewählten zweiten Schlüsselpaars signiert werden, um eine zugehörige Signatur zu erstellen;

wobei das Empfängergerät so eingerichtet ist, dass es

- den ersten öffentlichen Schlüssel speichert;
- die signierte aggregierte Authentifizierungsnachricht vom Bereitstellungsgerät (PD) über einen Eins-zu-Viele-Kommunikationskanal empfängt;
- die signierte aggregierte Authentifizierungsnachricht unter Verwendung des ersten öffentlichen Schlüssels authentifiziert;
- den zweiten öffentlichen Schlüssel des ausgewählten zweiten Schlüsselpaars aus der signierten aggregierten Authentifizierungsnachricht ableitet;
- die eine oder mehreren Nachrichten des ersten Typs vom Bereitstellungsgerät (PD) über den Eins-zu-Viele-Kommunikationskanal empfängt;
- die eine oder mehreren Nachrichten des ersten Typs unter Verwendung der jeweiligen Hash-Werte authentifiziert, die mit der signierten aggregierten Authentifizierungsnachricht verteilt wurden;
- eine oder mehrere Nachrichten des zweiten Typs zusammen mit der zugehörigen Signatur vom Bereitstellungsgerät (PD) über den Eins-zu-Viele-Kommunikationskanal empfängt; und

EP 4 546 703 B1

- die eine oder mehreren Nachrichten des zweiten Typs unter Verwendung der zugehörigen Signatur und des abgeleiteten zweiten öffentlichen Schlüssels des ausgewählten zweiten Schlüsselpaars authentifiziert.

15. Kommunikationssystem für ein Eins-zu-Viele-Kommunikationsnetzwerk, wobei das Kommunikationssystem ein Bereitstellungsgerät gemäß Anspruch 12 oder 13 und ein Empfängergerät gemäß Anspruch 14 umfasst.

**Revendications**

1. Procédé pour la transmission de données authentifiables via un canal de communication un-à-plusieurs depuis un dispositif fournisseur vers un dispositif récepteur, le procédé comprenant

- obtenir, par le dispositif fournisseur (PD), une première paire de clés comprenant une première clé privée et une première clé publique et prenant en charge des appariements bilinéaires, en particulier des appariements bilinéaires asymétriques, sur la base d'un premier générateur P sélectionné à partir d'un premier groupe cyclique G1 d'un premier ordre q et d'un deuxième générateur Q sélectionné à partir d'un deuxième groupe cyclique G2 du premier ordre q, dans lequel la première clé privée est basée sur un nombre aléatoire dans un intervalle ] 0 ; q-1] et la première clé publique est calculée à l'aide du deuxième générateur Q et de la première clé privée ;
- obtenir, par le dispositif fournisseur (PD), une ou plusieurs deuxièmes paires de clés, chacune comprenant une deuxième clé privée respective et une deuxième clé publique respective et prenant en charge des appariements bilinéaires, en particulier des appariements bilinéaires asymétriques, sur la base d'un deuxième ordre q' inférieur au premier ordre q ;
- fournir la première clé publique au dispositif récepteur ;
- sélectionner, par le dispositif fournisseur (PD), l'une des une ou plusieurs secondes paires de clés ;
- obtenir, par le dispositif fournisseur (PD), un ou plusieurs messages d'un premier type ;
- générer, par le dispositif fournisseur (PD), un hachage respectif pour chacun des un ou plusieurs messages du premier type ;
- composer, par le dispositif fournisseur (PD), un message d'authentification comprenant les hachages générés et soit la deuxième clé publique de la deuxième paire de clés sélectionnée, soit des données adaptées pour dériver la deuxième clé publique de la deuxième paire de clés sélectionnée ;
- signer, par le dispositif fournisseur (PD), le message d'authentification composé en utilisant la première clé privée pour produire un message d'authentification agrégé signé ;
- distribuer, par le dispositif fournisseur via le canal de communication un-à-plusieurs, le message d'authentification agrégé signé au dispositif récepteur ;
- après avoir distribué le message d'authentification agrégé signé, distribuer, par le dispositif fournisseur (PD) via le canal de communication un-à-plusieurs, le ou les messages du premier type au dispositif récepteur ;
- après avoir distribué le message d'authentification agrégé signé, obtenir, par le dispositif fournisseur (PD), un ou plusieurs messages d'un deuxième type ;
- signer, par le dispositif fournisseur (PD), le ou les messages du deuxième type en utilisant la deuxième clé privée de la deuxième paire de clés sélectionnée pour créer une signature associée ; et
- distribuer, par le dispositif fournisseur via le canal de communication un-à-plusieurs, le ou les messages du deuxième type avec la signature associée au dispositif récepteur.

2. Procédé selon la revendication 1, comprenant en outre :

- authentifier, par le dispositif récepteur, le message d'authentification agrégé signé en utilisant la première clé publique ;
- authentifier, par le dispositif récepteur, le ou les messages du premier type en utilisant les hachages respectifs distribués avec le message d'authentification agrégé signé ;
- dériver, par le dispositif récepteur, la deuxième clé publique de la deuxième paire de clés sélectionnée à partir du message d'authentification agrégé signé ; et
- authentifier, par le dispositif récepteur, le ou les messages du deuxième type à l'aide de la signature associée et de la deuxième clé publique dérivée de la deuxième paire de clés sélectionnée.

3. Procédé selon la revendication 1 ou 2, comprenant en outre

- chiffrer chaque deuxième clé publique d'un sous-ensemble du ou des deuxièmes paires de clés à l'aide d'une clé de sécurité symétrique dédiée (KDK) ; et

20

- fournir les secondes clés publiques cryptées au dispositif récepteur, en particulier avant de générer les messages du second type ; dans lequel :
- le message d'authentification est composé de manière sélective soit de la seconde clé publique de la seconde paire de clés sélectionnée, soit des données adaptées pour dériver la seconde clé publique de la seconde paire de clés sélectionnée ; et
- les données comprennent un nonce et la clé de sécurité symétrique dédiée (KDK) pour le décryptage de la seconde clé publique cryptée.

4. Procédé selon l'une des revendications 1 à 3, dans lequel :

- la première paire de clés est générée, par le dispositif fournisseur (PD) ou une entité de confiance, de manière répétée avec un premier taux de répétition, puis stockée dans le dispositif fournisseur (PD), chaque première paire de clés générée se distinguant de la première paire de clés d'une répétition précédente ; et
- sélectionner l'une des une ou plusieurs deuxièmes paires de clés est effectuée avec un deuxième taux de répétition qui est supérieur au premier taux de répétition, en particulier d'un facteur d'au moins 100, chaque deuxième paire de clés sélectionnée se distinguant de toute deuxième paire de clés sélectionnée des répétitions précédentes.

5. Procédé selon la revendication 4, dans lequel

- si obtenir la ou les deuxièmes paires de clés consiste à obtenir une seule deuxième paire de clés, obtenir la ou les deuxièmes paires de clés et sélectionner la ou les deuxièmes paires de clés est effectué avec le deuxième taux de répétition ; et
- si obtenir la ou les deuxièmes paires de clés consiste à obtenir plus d'une deuxième paire de clés, sélectionner l'une des deuxièmes paires de clés est effectué avec le deuxième taux de répétition et obtenir la ou les deuxièmes paires de clés est effectué avec le premier taux de répétition ou avec un troisième taux de répétition qui est supérieur au premier taux de répétition et inférieur au deuxième taux de répétition.

6. Procédé selon l'une des revendications 1 à 5, dans lequel la signature du message d'authentification composé et/ou la signature d'un ou plusieurs messages du deuxième type est basée sur un schéma de signature court, en particulier en utilisant une courbe Barreto-Naehrig ou une courbe Barreto-Lynn-Scott adaptée à l'appariement, le schéma de signature court produisant des signatures respectives correspondant à un point respectif unique de la courbe elliptique.

7. Procédé selon la revendication 6, dans lequel signer le message d'authentification composé et/ou signer le ou les messages du deuxième type est basé sur un schéma d'appariement de type III défini comme suit :

$$\{q,\ G_1,\ G_2,\ G_T,\ e\colon G_1 \times G_2 \to G_T,\ P \in G_1,\ Q \in G_2,\ H\colon \{0,1\}^* \to Z_q\},$$

où GT est un groupe apparié multiplicatif, H définit une fonction de hachage cryptographique pour générer un champ Zq, x est une clé privée sélectionnée aléatoirement à partir du champ Zq, et où une signature S pour un message m est calculée selon

$$S = \frac{1}{H(m) + x} \cdot P \in G_1.$$

8. Procédé selon l'une des revendications 1 à 7, dans lequel les hachages sont générés sur la base d'une clé intermédiaire dérivée d'au moins certaines parties du message d'authentification composé.

9. Procédé selon l'une des revendications 1 à 8, dans lequel chaque hachage est un code d'authentification de message haché à clé.

10. Procédé selon la revendication 8 ou 9, dans lequel le message d'authentification composé comprend en outre une section de contrôle comprenant des informations sur au moins l'un des éléments suivants :

- une clé à utiliser pour générer les hachages ;

EP 4 546 703 B1

- une fonction de hachage à utiliser pour générer les hachages ;
- un nombre de tours à utiliser pour générer les hachages ;
- un niveau de troncature à utiliser pour générer les hachages.

11. Produit logiciel comprenant des instructions qui, lorsqu'elles sont exécutées sur deux ou plusieurs processeurs d'au moins un dispositif fournisseur et un dispositif récepteur, amènent les deux ou plusieurs processeurs à exécuter le procédé selon l'une quelconque des revendications 1 à 10.

12. Dispositif fournisseur (PD) pour un réseau de communication un-à-plusieurs, dans lequel

- une première paire de clés comprenant une première clé privée et une première clé publique et prenant en charge des appariements bilinéaires, en particulier des appariements bilinéaires asymétriques, est générée par le dispositif fournisseur (PD) ou une entité de confiance sur la base d'un premier générateur P sélectionné à partir d'un premier groupe cyclique G1 d'un premier ordre q et d'un deuxième générateur Q sélectionné à partir d'un deuxième groupe cyclique G2 du premier ordre q, dans lequel la première clé privée est basée sur un nombre aléatoire dans un intervalle ]0;q-1] et la première clé publique est calculée à l'aide du deuxième générateur Q et de la première clé privée ;
- la première clé publique est fournie à un dispositif récepteur ;
- une ou plusieurs deuxièmes paires de clés, chacune comprenant une deuxième clé privée respective et une deuxième clé publique respective et prenant en charge des appariements bilinéaires, en particulier des appariements bilinéaires asymétriques, basés sur un deuxième ordre q' inférieur au premier ordre q, sont générées par le dispositif fournisseur (PD) ou l'entité de confiance ;

le dispositif fournisseur étant configuré pour :

- obtenir la première paire de clés et la ou les secondes paires de clés ;
- obtenir un ou plusieurs messages d'un premier type ;
- sélectionner l'une des secondes paires de clés ;
- générer un hachage respectif pour chacun des messages du premier type ;
- composer un message d'authentification comprenant les hachages générés et soit la deuxième clé publique de la deuxième paire de clés sélectionnée, soit des données adaptées pour dériver la deuxième clé publique de la deuxième paire de clés sélectionnée ;
- signer le message d'authentification composé en utilisant la première clé privée pour produire un message d'authentification agrégé signé ;
- distribuer, via un canal de communication un-à-plusieurs, le message d'authentification agrégé signé au dispositif récepteur ;
- distribuer, via le canal de communication un-à-plusieurs après avoir distribué le message d'authentification agrégé signé, le ou les messages du premier type au dispositif récepteur ;
- obtenir, après avoir distribué le message d'authentification agrégé signé, un ou plusieurs messages d'un deuxième type ;
- signer le ou les messages du deuxième type en utilisant la deuxième clé privée de la deuxième paire de clés sélectionnée pour créer une signature associée ; et
- distribuer, via le canal de communication un-à-plusieurs, le ou les messages du deuxième type avec la signature associée au dispositif récepteur.

13. Le dispositif fournisseur (PD) selon la revendication 12, dans lequel :

- chaque deuxième clé publique d'un sous-ensemble de la pluralité de deuxièmes paires de clés est cryptée à l'aide d'une clé de sécurité symétrique dédiée (KDK) et distribuée au dispositif récepteur, en particulier avant que les messages du deuxième type ne soient générés ;
- le message d'authentification est composé de manière sélective soit avec la deuxième clé publique de la deuxième paire de clés sélectionnée, soit avec les données adaptées pour dériver la deuxième clé publique de la deuxième paire de clés sélectionnée ; et
- les données comprennent un nonce et la clé de sécurité symétrique dédiée (KDK) pour la deuxième clé publique.

14. Dispositif récepteur pour un réseau de communication un-à-plusieurs, dans lequel

22

- une première paire de clés comprenant une première clé privée et une première clé publique et prenant en charge des appariements bilinéaires, en particulier des appariements bilinéaires asymétriques, est générée par un dispositif fournisseur (PD) ou une entité de confiance sur la base d'un premier générateur P sélectionné à partir d'un premier groupe cyclique G1 d'un premier ordre q et d'un deuxième générateur Q sélectionné à partir d'un deuxième groupe cyclique G2 du premier ordre q, dans lequel la première clé privée est basée sur un nombre aléatoire dans un intervalle ]0;q-1] et la première clé publique est calculée à l'aide du deuxième générateur Q et de la première clé privée ;

- la première clé publique est fournie au dispositif récepteur ;

- une ou plusieurs secondes paires de clés, chacune comprenant une seconde clé privée respective et une seconde clé publique respective et prenant en charge des appariements bilinéaires, en particulier des appariements bilinéaires asymétriques, basés sur un second ordre q' inférieur au premier ordre q, sont générées par le dispositif fournisseur (PD) ou l'entité de confiance ;

- un ou plusieurs messages d'un premier type sont obtenus par le dispositif fournisseur (PD) ;

- l'une des une ou plusieurs secondes paires de clés est sélectionnée par le dispositif fournisseur (PD) ;

- un hachage respectif est généré par le dispositif fournisseur (PD) pour chacun des un ou plusieurs messages du premier type ;

- un message d'authentification est composé par le dispositif fournisseur (PD) comprenant les hachages générés et soit la deuxième clé publique de la deuxième paire de clés sélectionnée, soit des données adaptées pour dériver la deuxième clé publique de la deuxième paire de clés sélectionnée ;

- le message d'authentification composé est signé par le dispositif fournisseur (PD) à l'aide de la première clé privée afin de produire un message d'authentification agrégé signé ;

- un ou plusieurs messages d'un deuxième type sont obtenus par le dispositif fournisseur (PD) ;

- les un ou plusieurs messages du deuxième type sont signés par le dispositif fournisseur (PD) à l'aide de la deuxième clé privée de la deuxième paire de clés sélectionnée afin de créer une signature associée ;

le dispositif récepteur étant configuré pour :

- stocker la première clé publique ;

- recevoir, depuis le dispositif fournisseur (PD) via un canal de communication un-à-plusieurs, le message d'authentification agrégé signé ;

- authentifier le message d'authentification agrégé signé en utilisant la première clé publique ;

- dériver la deuxième clé publique de la deuxième paire de clés sélectionnée à partir du message d'authentification agrégé signé ;

- recevoir, à partir du dispositif fournisseur (PD) via le canal de communication un-à-plusieurs, le ou les messages du premier type ;

- authentifier le ou les messages du premier type en utilisant les hachages respectifs distribués avec le message d'authentification agrégé signé ;

- recevoir, depuis le dispositif fournisseur (PD) via le canal de communication un-à-plusieurs, le ou les messages du deuxième type avec la signature associée ; et

- authentifier le ou les messages du deuxième type à l'aide de la signature associée et de la deuxième clé publique dérivée de la deuxième paire de clés sélectionnée.

15. Système de communication pour un réseau de communication un-à-plusieurs, le système de communication comprenant un dispositif fournisseur selon la revendication 12 ou 13 et un dispositif récepteur selon la revendication 14.

Fig 1

# Fig 2

200

201

202

203

204

205

206

207

208

209

Fig 3

Fig 4